# EUROPÄISCHE PATENTSCHRIFT

(11) **EP 1 273 007 B1**
(45) Veröffentlichungstag und Bekanntmachung des Hinweises auf die Patenterteilung: **15.10.2008**
(21) Anmeldenummer: 01919043.8
(22) Anmeldetag: 17.04.2001
(51) Int. Cl.: G11B 20/00, G06F 17/40, H04B 1/66

(54) **VERFAHREN ZUR BESTIMMUNG EINES CHARAKTERISTISCHEN DATENSATZES FÜR EIN DATENSIGNAL**
METHOD FOR DETERMINING A CHARACTERISTIC DATA RECORD FOR A DATA SIGNAL
PROCEDE PERMETTANT DE DETERMINER UN ENREGISTREMENT CARACTERISTIQUE POUR UN SIGNAL DE DONNEES

(30) Priorität: 14.04.2000 CH 744002000
(43) Veröffentlichungstag der Anmeldung: 08.01.2003
(73) Patentinhaber: Creaholic SA, 2502 Biel (CH)
(72) Erfinder: DWORZAK, Christoph, CH-2502 Biel (CH)
(74) Vertreter: Frei, Alexandra Sarah
(86) Internationale Anmeldenummer: PCT/CH2001/000240
(87) Internationale Veröffentlichungsnummer: WO 2001/080235

(56) Entgegenhaltungen:
- EP-A- 0 485 315
- EP-A- 0 612 160
- EP-A- 0 966 919
- US-A- 4 379 948
- PATENT ABSTRACTS OF JAPAN vol. 2000, no. 11, 3. Januar 2001 (2001-01-03) & JP 2000 221988 A (SONY CORP), 11. August 2000 (2000-08-11)
- PATENT ABSTRACTS OF JAPAN vol. 1996, no. 09, 30. September 1996 (1996-09-30) & JP 08 137498 A (MATSUSHITA ELECTRIC IND CO LTD), 31. Mai 1996 (1996-05-31)

## Beschreibung

Die vorliegende Erfindung betrifft ein Verfahren, ein Computerprogramm, einen Datenträger und eine Vorrichtung zur Bestimmung eines charakteristischen Datensatzes für ein Datensignal, wie sie in den unabhängigen Ansprüchen definiert sind.

Eine der Folgen der rasanten Entwicklung des World Wide Web ist die Online-Erhältlichkeit und Verbreitung von als Raubkopien vervielfältigten Musikaufnahmen. die Copyrightverletzungen im grossen Stil Tür und Tor öffnet. Die Feststellung von solchen Verletzungen erfolgte bisher nicht systematisch und war mehr oder weniger dem Zufall überlassen. Ein Grund dafür ist, dass die Identifikation von Musikaufnahmen durch Abhören zeitaufwändig ist und daher die von Copyrightverletzungen betroffenen Firmen und Personen erhebliche Mittel bereitstellen müssten. Computersoftwarebasierte Musikidentifikation, andererseits, hat sich bisher auf Indikatoren wie die Länge der Aufnahme oder charakteristische Kombinationen auf einer Aufnahme beschränkt. Eine solche Identifikation ist geeignet zum Vergleich von Original-CD-Aufnahmen, versagt aber, wenn eine Aufnahme verstümmelt, komprimiert oder sonstwie verändert worden ist. Sie funktioniert also beispielsweise insbesondere nicht bei der Identifikation von digitalen Downloads, analogen Aufnahmen und so weiter.

Analoge Probleme werden auch bei weiteren elektronischen Daten angetroffen, für die sich die Frage einer Copyright-Verletzung ergeben kann. So sind beispielweise Filmaufnahmen zunehmend digital verfügbar, bspw. auf einer DVD gespeichert oder in einem geeigneten Format on-line herunterladbar.

Diese Fragestellungen im Copyright-Bereich sind Teil einer grösseren Problematik. Die Handhabung von grossen Datenmengen ist generell eine ständig wachsende Herausforderung. Es werden immer grössere Datenmengen elektronisch erfasst und verfügbar gemacht. Komprimierungs-Algorithmen helfen zwar, diese Datenmengen zur Übertragung und zum Speichern etwas zu vermindern. Das in Grunde genommen viel grössere Problem der Handhabung der Daten, des sich Zurechtfindens in den Informationsmengen, wird aber dadurch nicht gelöst. Eine Gruppe von Beispielen von solchen grossen Datenmengen finden sich unter anderem in der Technik, bspw. bei der elektronischen Überwachung des Zustandes eines Systems, bspw. eines Motors, einer Anlage eines Gefährts etc. Dort wäre es wünschenswert, wenn aus einer grossen Menge von anfallenden Daten in kurzer Zeit wesentliche Informationen über den Zustand des überwachten Systems gewonnen werden könnten. Analoges gilt bspw. auch für die Wissenschaft und ihre direkten Anwendungen. Ganze Forschungszweige beschäftigen sich im Wesentlichen damit, während einer kurzen Zeit erfasste Daten auszuwerten, bspw. in der Astronomie in der Teilchenphysik, bei der Bestimmung der Struktur biologischer Materie. Ähnliches gilt ferner in der Medizin (Computertomographie Kernspintomographie. elektronisch erfasste Röntgenaufnahmen. Ultraschall-Datenerfassung etc.)

Hier setzt die vorliegende Erfindung an. Sie soll ermöglichen, dass einem Datensignal, welches in Funktion eines Parameters vorliegt, ein charakteristischer Datensatz zugeordnet werden kann, der für das Datensignal auch dann kennzeichnend ist, wenn es nicht genau erfasst (bspw. analog überspielt), elektronisch verändert und/oder verstümmelt worden ist. Dieser Datensatz soll einen effizienten und automatisierten Vergleich des Datensignals mit einer Referenz erlauben. Der Vergleich soll schlüssige Informationen darüber liefern, ob das Datensignal mit der Referenz im Wesentlichen identisch ist.

In der europäischen Offenlegungsschrift 0 485 315 werden ein Verfahren und eine Vorrichtung zur Spracherkennung offenbart. Das Tonsignal wird dabei fouriertransformiert des Tonsignals und in einzelnen Frequenzbändern weiterverarbeitet.

Der Erfindung liegt die Aufgabe zu Grunde, ein Verfahren zur Bestimmung eines charakteristischen Datensatzes für ein Datensignal sowie ein Computerprogramm, einen Datenträger und eine Vorrichtung zur Durchführung dieses Verfahrens zur Verfügung zu stellen, wobei das Verfahren automatisiert ablaufen soll und der Datensatz möglichst klein und überschaubar und für das Datensignal auch dann kennzeichnend sein soll, wenn das Datensignal nicht genau erfasst, elektronisch verändert und/oder verstümmelt worden ist.

Die Aufgabe wird gelöst durch ein Verfahren, ein Computerprogramm, einen Datenträger und eine Vorrichtung, wie sie in den unabhängigen Ansprüchen definiert sind.

Beim erfindungsgemässen Verfahren zur Bestimmung eines charakteristischen Datensatzes für ein Datensignal wird das Datensignal selbst in Funktion des Parameters nach charakteristischen Stellen durchsucht, und diese charakteristischen Stellen werden für die Erzeugung eines charakteristischen Datensatzes verwendet.

Ein erstes Beispiel für ein solches Datensignal ist eine Tonaufnahme, welches in Funktion der Zeit als Parameter vorliegt. Die charakteristischen Stellen können dann bspw. bezüglich ihrer Frequenzverteilung, ihres Rhythmus, ihrer Lautstärke und/oder der zeitlichen Änderung dieser Grössen als charakteristisch ausgewählt werden.

In dieser Ausgestaltung des erfindungsgemässen Verfahrens werden somit Tonaufnahmen selbst zu einem charakteristischen Datensatz verarbeitet. Dies im Gegensatz zum Stand der Technik, wo einer Tonaufnahme ein sie charakterisierender Datensatz auf dem Tonträger beigefügt wird. Dadurch ist der charakteristische Datensatz kennzeichnend für die Tonaufnahme, also beispielsweise das Musikstück selbst und ist nicht abhängig von eventuell elektronisch manipulierbaren Daten wie der Länge der Aufnahmen, ihrer Platzierung auf einem Datenträger (CD, DVD, ...) etc. Das erfindungsgemässe Verfahren weist dabei eine verblüffende Parallele zur Art auf, wie eine Person eine Musikaufnahme identifiziert. Eine analoge Überlegung lässt sich auch bspw. für Filmaufnahmen oder Resultate von Messungen etc. machen.

Durch das erfindungsgemässe Verfahren und die erfindungsgemässe Vorrichtung wird bspw. einem Datensignal, das digitalisiert eine Datenmenge von mehreren Megabyte umfasst, ein Datensatz von höchstens einigen Kilobyte zugeordnet. Es wird nun festgestellt, dass dieser erfindungsgemäss bestimmte Datensatz für die Musikaufnahme charakteristisch und unterscheidungskräftig ist. Aufgrund einer naheliegenden Analogie wird deshalb der Datensatz in der nachfolgenden Beschreibung auch ..Fingerprint" oder "Fingerabdruck" genannt.

Das erfindungsgemässe Verfahren kann vollständig automatisiert ablaufen, und es wird zu keinem Zeitpunkt eine Einschätzung oder eine Entscheidung von einer Person benötigt. Dadurch, und aufgrund des im Vergleich zum eigentlichen Datensignal sehr kleinen Umfangs der Datenmenge, die ein Fingerprint vorzugsweise umfasst, ist das Verfahren hochgradig geeignet für die Handhabung von sehr grossen Datenbanken. Dies gilt auch für die Anwendung im World Wide Web, das sich zu so etwas wie einer einzigen, weltumspannenden Datenbank entwickelt hat.

Das erfindungsgemässe Verfahren kann dazu benutzt werden, mittels Programmen, die das World Wide Web automatisch durchforsten ("webcrawlers", "spiders" etc.), dieses nach Ton- oder Videoaufnahmen zu durchsuchen. Dazu muss lediglich eine beispielsweise einem Musik- oder Filmverlag gehörende Datenbank von erfindungsgemäss hergestellten Fingerprints vorhanden sein, die mit den laufend ermittelten Fingerprints von im Web angebotenen Ton- oder Filmaufnahmen verglichen wird. Diese können dann bspw. mit anderen Mitteln darauf hin untersucht werden, ob sie Raubkopien sind. Das erfindungsgemässe Verfahren, das Computerprogramm, der Datenträger und die Vorrichtung können aber auch anderen Zwecken dienen. So kann beispielsweise durch einen Musikverlag eine unbekannte Tonaufnahme identifiziert und geliefert werden. Auch Radiostationen sehen sich oft mit dem Bedürfnis konfrontiert, die Identität einer beispielsweise durch eine Hörerin eingesandten Aufnahme festzustellen und finden in der Erfindung also auch ein Potential zur Ökonomisierung ihrer Tätigkeit. Eine weitere Anwendung der Erfindung könnte ein Billing-System für über Internet vertriebene Musikstücke oder Filmaufnahmen sein. Schliesslich kann die Erfindung auch dazu dienen, grössere Musik- oder Filmdatenbanken nach Duplikaten zu durchsuchen oder vor einem Neueintrag in eine solche Datenbank zu untersuchen, ob die entsprechende Aufnahme nicht schon vorhanden ist.

Nachfolgend wird die Erfindung anhand eines Ausführungsbeispieles im Bereich "Musikaufnahmen" detaillierter beschrieben. Die Zeichnungen dienen dabei zur Illustration. In den Zeichnungen zeigt
- die Figur 1 ein Eingangssignal,
- die Figur 2 das fouriertransformierte Signal eines Zeitintervalls,
- die Figur 3 das logarithmisch skalierte und in 9 Bänder unterteilte Signal der Figur 2.
- die Figur 4 eine Darstellung der jeweils über das ganze Band gemittelten Signale von 8 Bändern in Funktion der Zeit
- die Figur 5 eine Darstellung einer Abfolge von jeweils über einen Zeitabschnitt von 0,4 s gemittelten, aus je 9 Datenpunkten bestehenden Daten,
- die Figur 6 eine Darstellung wie Figur 5, wobei die Daten der vier für den Fingerprint bestimmenden Zeitabschnitte fett dargestellt sind,
- die Figur 7 eine Übersicht über ein Verfahren zur Bestimmung eines charakteristischen Zeitbereiches
- die Figur 8 einen charakteristische, gemäss der Erfindung ermittelten Datensatz als Menge von diskreten Werten in Funktion der Zeit und der Frequenz
- die Figur 9 die Werte der Figur 8, zusammen mit einer Durchschnittsfläche, und
- die Figur 10 die Durchschnittsfläche aus der Figur 9 zusammen mit der Darstellung von ihre Lage festlegenden Winkeln.

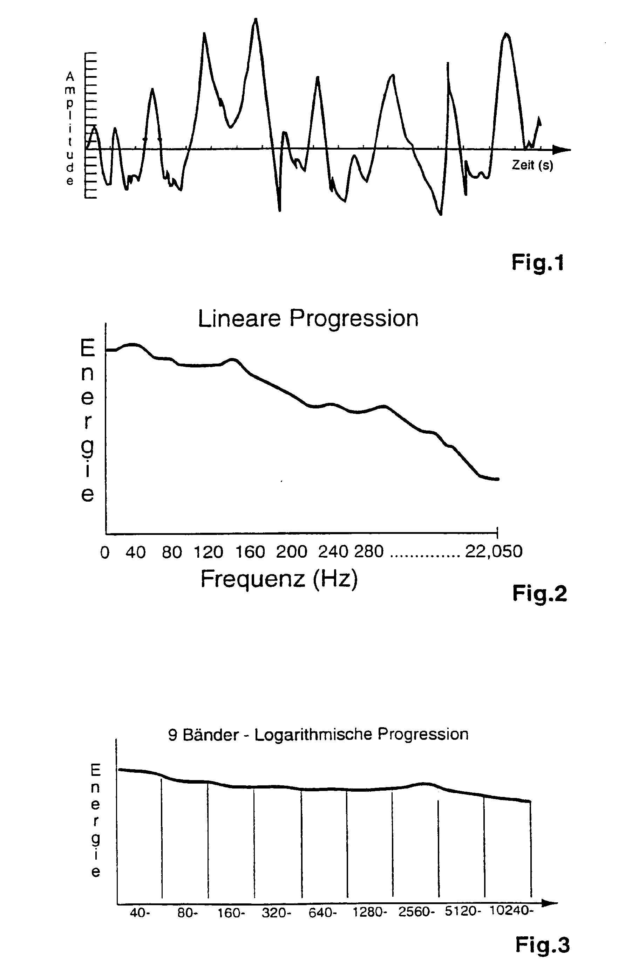

Ein beispielsweise in Musik, eine menschliche Stimme oder ein sonstiges Tonsignal transformierbares Eingangssignal wird in einem ersten Schritt in eine verarbeitbare Standardform gebracht. Dazu wird es beispielsweise nötigenfalls digitalisiert oder entkomprimiert, von einem Stereo- zu einem Monosignal umgewandelt und anschliessend der Vorrichtung über eine Schnittstelle zugeführt. Die Vorrichtungs-Eingangsdaten liegen demnach als einfaches Signal *A(t)* in Funktion der Zeit *t* vor, wie das in der **Figur 1** der Zeichnung dargestellt ist.

Das Verfahren beruht nun darauf, dass das Tonsignal durchgescannt, sein Frequenzspektrum in einer Vielzahl von Intervallen bestimmt und die Datenmenge durch ein Datenverarbeitungsgerät, also einen Computer, auf wenige Datenpunkte reduziert wird. Anschliessend wird eine bestimmter Zeitbereich ausgewählt. Die das Frequenzspektrum über diesen Zeitbereich repräsentierenden Datenpunkte dienen als "Fingerprint" des Tonsignals. Im Folgenden wird anhand eines Beispieles mit vorteilhaften Zahlen und Zeitintervalllängen eine Möglichkeit zur Bestimmung dieses Fingerprints noch näher erläutert.

Das Frequenzspektrum *Aᵢ(f)* (**Figur 2**) des Signals im Intervall i erhält man aus dem Signal *Aᵢ(t)* in diesem Intervall mittels einer Fouriertransformation. Im ausgeführten Beispiel wird das über eine Intervalllänge von 25 ms aufgenommene Signal numerisch fouriertransformiert. Die Fouriertransformation erfolgt durch ein bekanntes numerisches Verfahren, beispielsweise durch den FFT- (Fast Fourier Transform) Algorithmus. Das so erhaltene Frequenzspektrum *Aᵢ(f)* wird nachfolgend logarithmisch skaliert. Das wirkt im Allgemeinen gleichzeitig auch glättend auf das Spektrum. Das Spektrum wird anschliessend in 9 Bänder aufgeteilt, die auf der logarithmischen Frequenzskala beispielsweise eine uniforme Breite aufweisen, wie das auch in der **Figur 3** dargestellt ist. In jedem Band erfolgt nun eine gewichtete Mittelung des *Aᵢ(f)*-Signals über die Bandbreite zu einem Wert *A_{i,n}*, wobei *n*=1,2,...*n₀*=9. Die Mittelwerte *A_{i,n}* dienen als für das Frequenzspektrum in Band n im Intervall i charakteristische Werte. Fouriertransformation. Skalierung und Mittelung erfolgen simultan zum Durchscannen des Tonsignals. Auf diese Weise wird die Menge der im Datenverarbeitungsgerät zu speichernden und zu verarbeitenden Daten zu jedem Zeitpunkt klein gehalten.

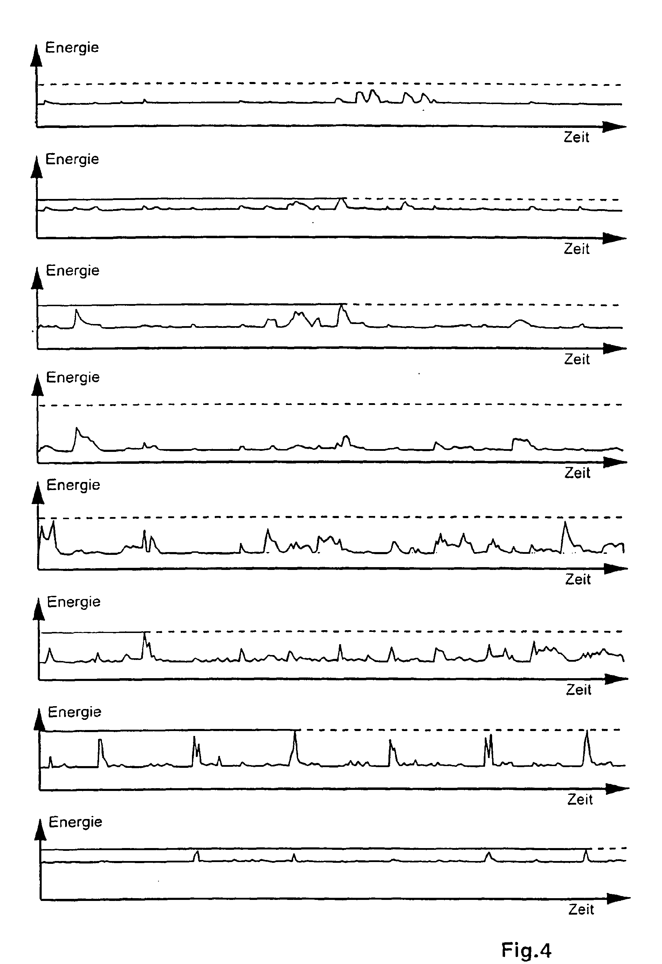

Eine Darstellung der Werte *A_{i,n}* für in Funktion des die Zeit repräsentierenden Intervall-Indexes i für jedes Band *n*=1.2...,*n₀*=8 als Resultate einer tatsächlichen Messung sind in der **Figur 4** dargestellt. Für jede der Kurven stellt das Minimum des Wertes auch die Nulllinie dar.

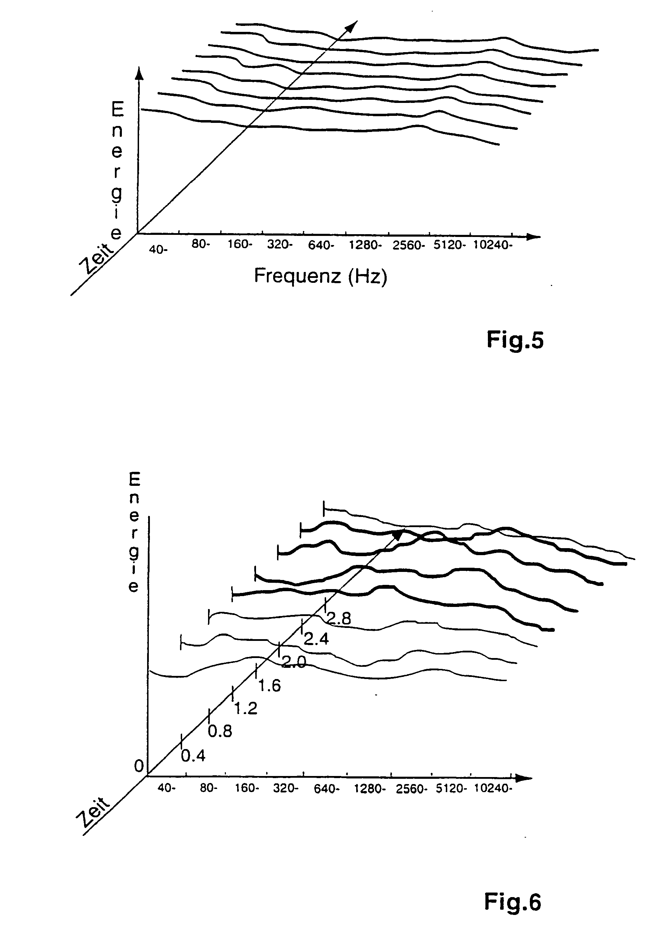

In einem nächsten Schritt erfolgt eine weitere Mittelung über die Zeit. Dazu werden für jedes Band *n* die Werte *A_{i,n}* von den jeweils 16 Intervallen i eines Zeitabschnittes z von 0,4 s Dauer zu einem Wert *A_{z,n}* gemittelt. Auch diese Mittelung kann simultan zum Durchscannen des Tonsignals erfolgen. **Figur 5** stellt eine Abfolge von acht jeweils aus *n₀*=9 Datenpunkten bestehenden Daten eines Zeitabschnittes dar.

Nachdem das Tonsignal durchgescannt und der vorstehend beschriebene Prozess vollständig abgelaufen ist, wird aus den Enddaten *A_{z,n}* der Fingerprint ermittelt. Dazu werden in einem ersten Schritt jeweils vier benachbarte Zeitabschnitte *z* zu einem Zeitbereich von 1,6 s Länge zusammengefasst. Für jeden Zeitbereich wird anschliessend ein bestimmter Wert ermittelt, beispielsweise die Summe der 4x9 = 36 Werte *A_{zn},* die Summe der Differenzen des ersten und des letzten *A_{z,n}*-Wertes für jedes Band n oder dergleichen. Der bestimmte Wert dient der Identifikation einer Stelle in der Tonaufnahme. Der Fingerprint besteht aus den 36 Werten *A_{zn}*, *z=k,...,k*+3*; n*=*1*,...,*9* desjenigen Zeitbereichs, für den der bestimmte Wert extremal, also beispielsweise die Summe maximal ist (**Figur 6****)**.

Die Bestimmung des für den Fingerprints ausgewählten Zeitbereichs muss nicht direkt oder indirekt aufgrund von aus den Werten *A_{i,n}* ermittelten Informationen erfolgen. Alternativ dazu kann auch das Datensignal in Funktion der Zeit zur Bestimmung eines solchen Zeitbereichs herangezogen werden. Als Zeitbereich wird bspw. eine Umgebung des Lautstärkemaximums ausgewählt. Der charakterisitische Datensatz setzt sich analog zum vorstehend beschriebenen Beispiel zusammen aus den Werten *A_{z,n}* in einer Umgebung des Maximums.

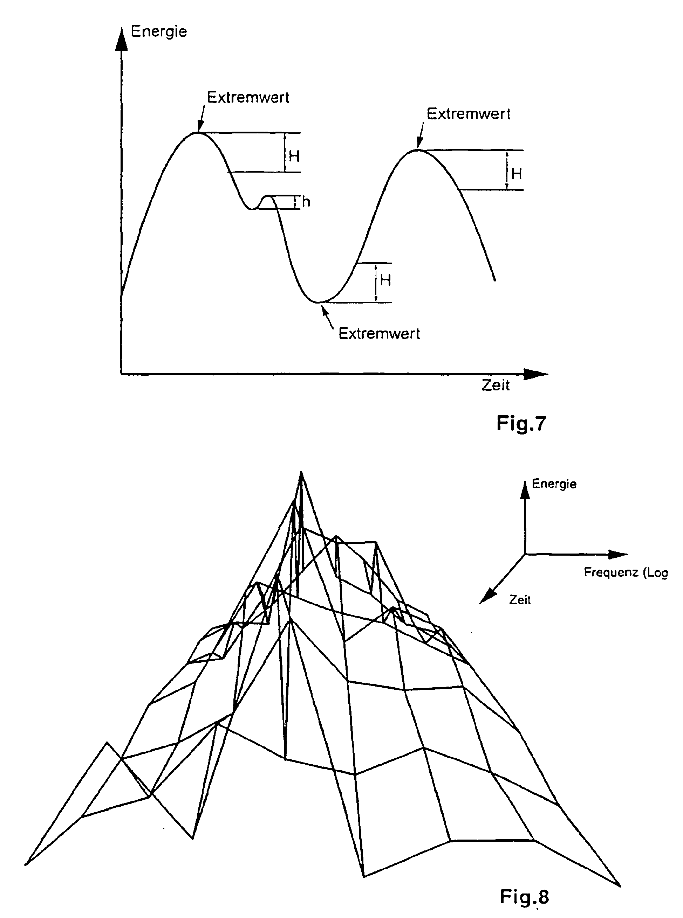

Eine Verfeinerung des Vorgehens zur Bestimmung einer charakteristischen Stelle im Datensignal wird noch anhand der **Figur 7** beschrieben. In der Figur ist schematisch die Energie in Funktion der Zeit dargestellt. Diese Kurve kann bspw. direkt aus dem Signal stammen. Sie kann aber auch gemäss dem vorstehend beschriebenen Mittelungsverfahren über die *A_{z,n}*-Werte erhalten werden, welches im Beispiel der Figur 6 zur Bestimmung des Zeitbereichs dient. Gemäss der Figur wird ein lokales Maximum bestimmt. Wenn anschliessend an das Erreichen des Maximums der Wert der Energie um einen konfigurierbaren Wert *H* abnimmt, wird eine Umgebung dieses Wertes zur Bestimmung eines Fingerprints verwendet. Danach wird nach einem lokalen Minimum gesucht. Als solches gilt ebenfalls nur eines, nach welchem die Energie um den Wert *H* (oder einen anderen konfigurierbaren Wert) zunimmt. In der Figur ist noch ein Minimum eingezeichnet, nach welchem der Wert lediglich um *h<H* zunimmt. Dieser Wert wird nicht als Minimum verwendet. Der Wert, an dem das Minimum erreicht wird, wird bspw. nicht für einen Fingerprint verwendet. Hingegen wird erst danach wieder ein Maximum ermittelt, an dem der nächste Fingerprint bestimmt wird. In der Figur sind die verwendeten Extrema mit Pfeilen bezeichnet.

Durch dieses Vorgehen kann eine Erkennung von Datensignalen synchronisiert werden: Man kann zu jedem Zeitpunkt in einen Stream einsteigen und dann die Fingerprints an den Orten nehmen, die auch schon zur Ermittlung der Fingerprints der Referenz herangezogen wurden.

Obwohl das ursprüngliche Datensignal hier nur in Funktion eines Parameters - der Zeit - gegeben war, ist der so ermittelte Fingerprint eine Funktion von zwei diskreten Variablen z und *n*. Dadurch lässt sich eine Erkennungsquote erreichen, die einem entsprechenden Verfahren, welches nur Datenpunkte in Funktion eines Parameters erfasst, weit überlegen ist. Dies gilt sowohl im Vergleich zu einem Verfahren, welches die Bestimmung einzelner Lautstärke-Werte in Funktion der Zeit vorsieht, als auch zu der Bestimmung eines Frequenzspektrums zu einem bestimmten Zeitpunkt. Diese gesteigerte Erkennungsquote gilt auch dann, wenn bspw. eine mit der Anzahl der Datenpunkte *A_{z,n}* vergleichbare Anzahl Lautstärke-Werte gewählt wird.

Es sei hier ausdrücklich darauf hingewiesen, dass natürlich ebenso gut Intervalllängen, Bandbreiten, etc. gewählt werden können, die von denen im Ausführungsbeispiel verschieden sind. Beispielsweise beträgt die Anzahl der verwendeten Bänder *n₀* vorzugsweise mindestens 4 und 40, bspw. zwischen 6 und 16. Die Anzahl der Zeitabschnitte ist vorzugsweise ebenfalls mindestens 4 und kann bspw. zwischen 8 und 64 liegen, z.B. bei 16. Die Gesamtzahl der Datenpunkte, die den Fingerprint bilden beträgt bspw. mindestens 24. Die Länge des Zeitintervalls, über das der Fingerprint ermittelt wird, beträgt vorzugsweise mindestens 0.05 s und höchstens 60 s.

Eine Darstellung des charakteristischen Datensatzes eines Datensignals mit einer von der vorstehenden Beschreibung verschiedenen Parameterwahl ist in **Figur 8** dargestellt. Die Figur zeigt Werte *A_{z,n}* in Funktion von z. entsprechend der Zeit und des Bandes *n*, entsprechend der (logarithmierten) Frequenz. Im Beispiel gemäss Figur 8 sind dabei 8 Frequenzbänder mit je 8 Stützpunkten gewählt. Die 64 Datenpunkte bilden den Fingerprint und stellen ein ,Gebirge' dar.

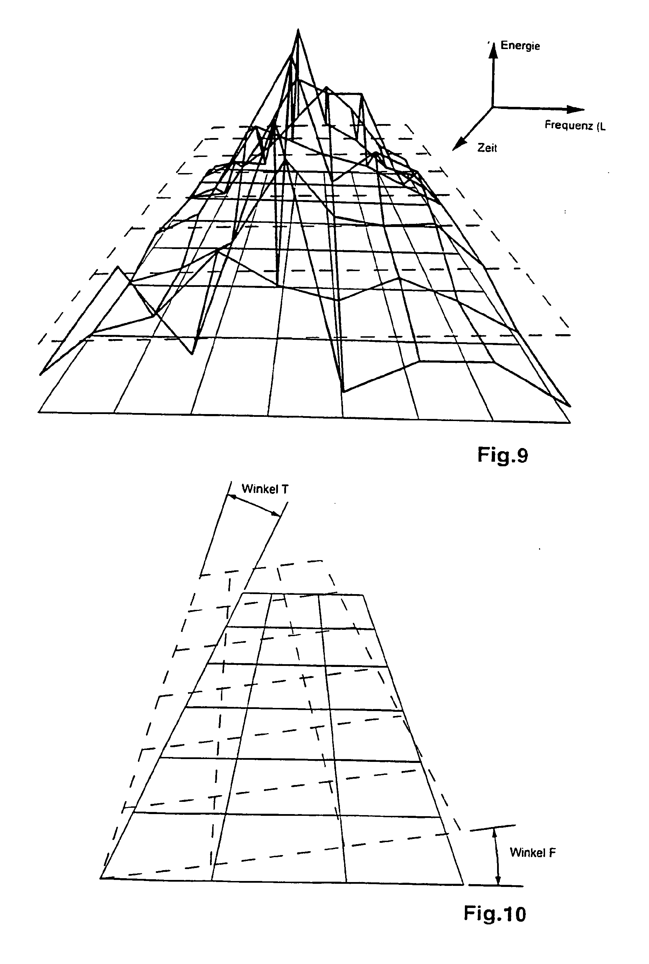

Anhand der **Figur 9** wird noch aufgezeigt, wie der charakteristische Datensatz von Figur 8 noch weiter reduziert werden kann: In der Figur gestrichelt gezeichnet ist eine Durchschnittsfläche als mittlere Ebene der Punkte. Sie wird bspw. bestimmt mit der Methode der kleinsten Quadrate. Bekanntlich kann eine Ebene durch 3 Parameter vollständig charakterisiert werden, bspw. durch die x-, y- und z-Achsenabschnitte in einem kartesischen Koordinatensystem. Als Alternative dazu werden gemäss der Erfindung die mittlere Lage der Ebene (die Höhe) sowie die Winkel in Frequenzrichtung und in Zeitrichtung als Parameter verwendet. Figur 10 dient zur Verdeutlichung der Bedeutung der Winkel: sie sind ein Mass für den lokalen Lautstärkenverlauf und die Lokale Frequenzverteilung.

Die drei Parameter Höhe, Winkel in Frequenzrichtung und Winkel in Zeitrichtung werden nicht mehr als Fingerprint für das Datensignal verwendet, sondern dienen zur dessen Indexierung. Eine solche Indexierung empfiehlt sich bei grossen Datenmengen, wo der Vergleich eines Fingerprints mit allen Referenz-Fingerprints einer Datenbank zu Performance-Problemen führen kann. Durch die Indexierung lassen sich Fingerprints sortieren. Wenn ein Abgleich eines Fingerprints mit den Werten einer Datenbank erfolgen soll, wird die Indexierung der Datenbank-Signale mit den entsprechenden Indexierungswerten des zu vergleichenden Signals verglichen. Es werden diejenigen Fingerprints aus der Datenbank ausgewählt, für welche die Winkel von denjenigen des zu vergleichenden Fingerprints nur wenig abweichen, bspw. plus/minus eine Prozentzahl wie plus/minus 5%. Die Höhe wird vorzugsweise nicht zur Indexierung verwendet, da sie von der Skalierung abhängt. Ein weiterer verwendbarerer Index ist die "Hügeligkeit" des Gebirges, d.h. die mittlere quadratische Abweichung der Punkte des Gebirges von der Fläche. Die so ausgewählten Fingerprints werden mit dem zu vergleichenden Fingerprint verglichen.

Der Einfachheit halber kann auch nur einer der obigen Werte als Index verwendet werden.

Ein Vergleich der Fingerprints zweier verschiedener Tonsignale erfolgt nun wie folgt. Je nach dem ob die Tonsignale skaliert worden sind oder nicht, werden in einem ersten Schritt die Fingerprints normiert. Alle Werte *A_{z,n}* eines jeden der beiden Fingerprints werden mit einer Konstante multipliziert, so dass nach dieser Multiplikation die Summen der 36 Werte *A'_{z,n}* bzw. *B'_{c,n}* beider Fingerprints gleich einer vorgegebenen Zahl, beispielsweise 1, sind. So können auch Tonaufnahmen verschiedener Lautstärken verglichen werden. Wenn hingegen klar ist, dass die beiden Signale nicht skaliert worden sind, sollte eine Normierung unterbleiben, da sie einen Informationsverlust mit sich bringt. Von den möglicherweise normierten Fingerprints wird punktweise die Summe der quadrierten Differenzen *A'_{z,n} - B'_{c,n}* gebildet. Wenn diese einen gewissen Schwellenwert nicht überschreitet, sind die von den Fingerprints charakterisierten Tonaufnahmen identisch. Es sei hier noch erwähnt, dass dieses Verfahren einen *Fuzzy-Match* liefert. Die erhaltene Information "identisch"/"nicht identisch" hängt vom gewählten Schwellenwert ab und ist nicht streng eindeutig, wobei aber die Erkennungsquote ausserordentlich hoch ist.

Die Bestimmung eines Fingerprints für Datensignale, die in Funktion eines einzigen Parameters (bspw. der Zeit) gegeben sind, funktionieren analog zu obigem Verfahren für Tonsignale: Das Datensignal wird in einem kurzen Intervall nach dem Parameter *t* fouriertransformiert und das dadurch erhaltene ,Spektrum' über eine endliche Anzahl Bänder zu einer endlichen Anzahl *n₀* von Werten gemittelt. Die Bänder weisen bspw. auf einer logarithmischen Skala eine uniforme Breite auf. Dieses Verfahren wird für eine Mehrzahl von aufeinander folgenden Intervallen durchgeführt, wodurch man *n₀* diskrete Funktionen vom Intervall-Index *i* bzw. vom Parameter *t* erhält. Darauf hin erfolgen bspw. noch Mittelungen über mehrere Intervalle (*i*) zu mit einem weiteren Index z versehenen Werten *A_{z,n}.* Dann wird eine charakteristische Stelle in Funktion des Parameters *t* bzw. des Indexes *i* oder *z* bestimmt. Als solche wird eine Stelle ausgesucht. wo ein bestimmter Wert extremal ist. Der Fingerprint besteht dann aus den Werten *A_{z,n}* für *n=1,...,n₀* und *z* in einer Umgebung des Extremalwerts. Auch bei dieser Ausführungsform wird durch die Unterteilung des Parameterraums in eine Vielzahl von Intervallen *i* und Fouriertransformation in diesen Intervallen erreicht, dass die charakteristischen Daten in Funktion von zwei Indizes *z* und *n* bzw. als diskrete Funktion sowohl des Parameters *t* und einer entsprechenden Variable im Fourierraum vorliegt. Der Fingerprint ist also quasi als 2D-Funktion gegeben, welche aus einer 1D-Funktion gewonnen wird.

Für viele Signale bietet sich die Zeit als geeigneter Parameter an. Die Fouriertransformierte als Frequenzspektrum hat dann auch eine anschauliche Bedeutung. Das Verfahren lässt sich aber auch auf andere Parameter anwenden. Bei einem ein Bild darstellenden Signal kann auch für einen Ortsparameter ein entsprechendes Spektrum bestimmt werden, bspw. durch Fourier-Transformation.

Am Beispiel 'Filmaufnahme' wird hier noch kurz erläutert, wie dieses Verfahren auf Funktionen von mehreren Variabeln ausgedehnt wird. Das Videosignal einer Filmaufnahme kann bspw. als *h*(*x, y, t)* dargestellt werden, wobei *x, y* ein die Anzeigefläche repräsentierendes Koordinatensystem und *t* die Zeit ist. Analog zu obigem Verfahren erfolgt eine Fouriertransformation nach der Zeit. Dies erfolgt im Prinzip für alle Werte *x*, *y*. Vorzugsweise wird aber in *x*- und *y*-Richtung eine geeignete Mittelung zur Reduktion der Datenmenge durchgeführt wird. Zu Mittelungen von Funktionen der Art *hₜ(x, y)* sei auf das umfangreiche Know-how aus der elektronischen Bildverarbeitung verwiesen. Die folgenden Schritte erfolgen wieder analog zu obigem Verfahren.

Zusammenfassend besteht das Verfahren zur Bestimmung eines charakteristischen Datensatzes für ein Datensignal darin, dass das Datensignal selbst analysiert, weiterverarbeitet und ein Teil als charakteristischer Datensatz zurückbehalten wird. Vorzugsweise wird dazu das Tonsignal digitalisiert, falls es in einer nicht digitalen Form vorliegt, und anschliessend mittels elektronischer Datenverarbeitung analysiert und zum charakteristischen Datensatz verarbeitet, so dass die Datenmenge des charakteristischen Datensatzes um ein Vielfaches kleiner ist als diejenige des Datensignals. Das kann durch Ausführung der folgenden Schritte geschehen:
- Unterteilung des Datensignals in Intervalle i und Zeitabschnitte z,
- Bestimmung eines Spektrums in jedem Intervall i durch Überführung des Signals in den Frequenzraum,
- Extraktion von für das Spektrum charakteristischen Werten *A_{i,n}* für jedes Intervall,
- Bestimmung von für das Spektrum charakteristischen Werten *A_{i,z}* aus den Werten *A_{i,n}* für jeden Zeitabschnitt,
- Festsetzung eines Satzes von Zeitabschnitten, deren Werte *A_{i,z}* den charakteristischen Datensatz bilden.

Die Bestimmung eines Spektrums durch Überführung des Signals in den Frequenzraum geschieht in den vorstehend beschriebenen Beispielen durch eine numerische Fouriertransformation. Es können aber auch alternative bekannte oder noch zu entwickelnde Methoden zur Überführung eines Signals in den Frequenzraum angewandt werden, bspw. eine Hartley-Transformation, eine Reihe von (digital-) elektronischen Filtern, etc.

Die Extraktion des charakteristischen Wertes *A_{i,n}* ist beispielsweise eine gewichtete Mittelung über ein Frequenzband. Jeder Zeitabschnitt kann aus einem oder aus mehreren Intervallen bestehen, so dass die Bestimmung der Werte *A_{z,n}* durch Mittelung der Werte *A_{i,n}* über die Intervalle des Zeitabschnittes erfolgt.

Zur Festsetzung des Satzes von Zeitabschnitten wird vorzugsweise jeweils eine Gruppe von einander benachbarten Zeitabschnitten zusammengefasst. Für jeden Zeitbereich wird anschliessend ein bestimmter Wert ermittelt, beispielsweise die Summe der 36 Werte *A_{z,n}* oder die Summe der Differenzen des ersten und des letzten *A_{z,n}*-Wertes für jedes Band n. Diejenige Gruppe von Zeitabschnitten, für die der bestimmte Wert extremal, also beispielsweise die Summe maximal ist, bildet den Satz von Zeitabschnitten.

Ein Datenverarbeitungsprogramm zur Bestimmung eines charakteristischen Datensatzes für ein Tonsignal ist beispielsweise ein Programm, das einen Computer das vorstehend beschriebene Verfahren Schritt für Schritt ausführen lässt. Ein Datenträger für dieses Programm ist beispielsweise eine mit diesem Programm bespielte Computer-Harddisk, eine CD oder DVD, eine elektrooptische Computerdisc, eine externer magnetischer Speicher, eine Computerdiskette oder ein anderes Speichermedium. Eine Vorrichtung zur Bestimmung eines charakteristischen Datensatzes für ein Tonsignal ist beispielsweise ein mit einem Datenverarbeitungsprogramm ausgestatteter Computer.

Abschliessend sei noch darauf hingewiesen, dass das vorstehend beschriebene Verfahren keineswegs die einzige denkbare Ausführungsform der Erfindung darstellt, sondern noch in mancher Hinsicht abgeändert werden kann. So sind wie bereits erwähnt ganz andere Intervall- und Zeitabschnittlängen denkbar als die vorstehend beschriebene. Insbesondere ist es auch möglich, dass jeder Zeitabschnitt genau einem Zeitintervall entspricht, dass also die Werte *A_{i,n}* nicht weiter gemittelt werden. Auch zur Bestimmung des Satzes von Zeitabschnitten sind andere Ansätze denkbar als die vorstehend ausgeführte Festlegung von Werten *A_{z,n}* durch Ermittelung eines extremalen Wertes. Wesentlich ist lediglich die eindeutige Identifizierung einer Stelle im Datensignal.

Auch vom vorstehend als Beispiel beschriebenen Verfahren deutlich verschiedene Ansätze sind denkbar. So können beispielsweise wichtige Verfahrensschritte wie Überführung des Signals in den Frequenzraum oder Mittelungen auch analog-elektronisch ausgeführt werden. Auch bspw. das Bestimmen von Extrema ist sehr wohl in bekannter Art analog-elektronisch durchführbar. Eine Vorrichtung zum Durchführen des erfindungsgemässen Verfahrens mit elektronischen Mitteln besitzt bspw. Mittel zur elektronischen Fouriertransformation. zur elektronischen Integration und Schaltmittel, welche durch das Erreichen von Maximal- oder Schwellwerten des Signals getätigt werden. Ausserdem ist bspw. ein A/D-Wandler vorhanden, der den Funktionswerten, welche beim Betätigen der Schaltmittel ermittelt werden einen digitalen Wert zuordnet. Speichermittel, bspw. ein durch eine Schnittstelle angeschlossener Computer, ein EEPROM-Speicher oder dergleichen können zur Abspeicherung des charakteristischen Datensatzes dienen. Auch ein Abgleich mit einer bspw. ebenfalls gespeicherten Referenz kann analog-elektronisch erfolgen. Die Fouriertransformation/ Logarithmierung lässt sich in einer solchen Vorrichtung durch eine Reihe von Bandpassfiltern ersetzen. In dieser Ausführungsform sorgen die Bandpassfilter für eine Überführung des Signals in den Frequenzraum.

Eine andere Variation der obigen Ausführungsbeispiele kann erreicht werden, wenn der Bereich, der als charakteristische Stelle im Datensignal ausgewählt wird, nicht zusammenhängend ist. Es kann bspw. vorgesehen sein. dass dieser Bereich mehrere Zeitspannen umfasst, welche jeweils bspw. eine halbe Minute, eine Minute.... voneinander beabstandet sind. Auf diese Weise kann unter anderem auch ein einzelner Ausschnitt aus einem Musikstück oder Film. bspw. ein Trailer, vom ganzen Musikstück oder Film eindeutig unterschieden werden.

## Patentansprüche

1. Verfahren zur Bestimmung eines charakteristischen Datensatzes für ein Datensignal, welches in Funktion eines Parameters *t* vorliegt, wobei das Datensignal selbst nach charakteristischen Stellen durchsucht wird und diese charakteristische Stellen für die Erzeugung eines charakteristischen Datensatzes verwendet werden, mit folgenden Schritten:
- Festlegen von Parameter-Intervallen *i*
- Transformation nach dem Parameter *t* des Datensignals in den Intervallen *i* in einen entsprechenden Frequenzraum
- Mittelung des so erhaltenen Spektrums zu diskreten Werten *A_{i,n}* für jedes Intervall *i*
**gekennzeichnet durch die weiteren Schritte:**
- Festlegen einer Mehrzahl von Parameter-Bereichen, wobei jeder Bereich mehrere Intervalle *i* umfasst,
- Auswahl eines der Parameter-Bereiche als charakteristische Stelle anhand von aus dem Datensignal oder den Werten *A_{i,n}* gewonnenen Informationen, und
- Ermittlung von charakteristischen Daten aus den Werten *A_{i,n}* der im ausgewählten Parameter-Bereich liegenden Intervalle.

2. Verfahren nach Anspruch 1, **dadurch gekennzeichnet, dass** der Parameter *t* die Zeit ist, dass die Parameter-Intervalle Zeitintervalle sind, und dass die Parameterbereiche Zeitbereiche sind.

3. Verfahren nach Anspruch 2, **dadurch gekennzeichnet, dass** der Zeitbereich als die charakteristische Stelle bezüglich der Frequenzverteilung, des Rhythmus, des Betrags der Amplitude des Datensignals und/oder der zeitlichen Änderung dieser Grössen als charakteristisch ausgewählt wird.

4. Verfahren nach Anspruch 2 oder 3, **dadurch gekennzeichnet, dass** das Datensignal digitalisiert wird, falls es in einer nicht digitalen Form vorliegt, und dass es mittels elektronischer Datenverarbeitung analysiert und zum charakteristischen Datensatz verarbeitet wird, wobei die Datenmenge des charakteristischen Datensatzes um ein vielfaches kleiner ist als diejenige des Datensignals.

5. Verfahren nach Anspruch 4, umfassend die folgenden Schritte:
- Unterteilung des Datensignals in Intervalle *i* und Zeitabschnitte *z*,
- Bestimmung eines Frequenzspektrums in jedem Intervall *i*,
- Extraktion von für das Frequenzspektrum im Intervall i charakteristischen Werten *A_{i,n}* für jedes Intervall *i*,
- Bestimmung von für das Frequenzspektrum im Zeitabschnitt *z* charakteristischen Werten *A_{z,n}* aus den Werten *A_{i,n}* für jeden Zeitabschnitt,
- Festsetzung eines den Zeitbereich bildenden Satzes von Zeitabschnitten, deren Werte *A_{z,n}* den charakteristischen Datensatz bilden.

6. Verfahren nach Anspruch 5, **dadurch gekennzeichnet, dass** der Frequenzraum in mehrere Frequenzbänder unterteilt wird, wobei die Breite der verschiedenen Frequenzbänder vorzugsweise in einer logarithmischen Skala identisch ist, und dass die Extraktion der charakteristischen Werte *A_{i,n}* eine gewichtete Mittelung über jedes Frequenzband *n i*st.

7. Verfahren nach Anspruch 5 oder 6, **dadurch gekennzeichnet, dass** jeder Zeitabschnitt aus einem oder aus mehreren Intervallen besteht.

8. Verfahren nach Anspruch 7, **dadurch gekennzeichnet, dass** die Bestimmung der Werte *A_{z,n}* durch Mittelung der Werte *A_{i,n}* über die Intervalle des Zeitabschnittes erfolgt.

9. Verfahren nach einem der Ansprüche 5 bis 8, **dadurch gekennzeichnet, dass** zur Festsetzung des Satzes von Zeitabschnitten jeweils eine Gruppe von einander benachbarten Zeitabschnitten zusammengefasst wird, dass von den Werten *A_{z,n}* der Zeitabschnitte jeder Gruppe die Summe oder eine Summe von Differenzen gebildet wird, und dass diejenige Gruppe von Zeitabschnitten den Satz von Zeitabschnitten bildet, zu welcher der so ermittelte Wert extremal ist.

10. Verfahren nach einem der Ansprüche 5 bis 9, **dadurch gekennzeichnet, dass** zur Festsetzung des Satzes von Zeitabschnitten ein erstes lokales Maximum einer aus dem Datensignal bestimmten Grösse in Funktion der Zeit bestimmt wird, dass festgestellt wird ob diese Grösse anschliessend an das Erreichen des ersten lokalen Maximums um einen ersten konfigurierbaren Wert (*H*) abnimmt, dass, wenn das der Fall ist, mindestens ein Zeitabschnitt in der Umgebung des ersten lokalen Maximums als zum Satz von Zeitabschnitten gehörend bestimmt wird, dass anschliessend nach einem lokalen Minimum der Grösse gesucht wird, nach welchem die Grösse um einen zweiten konfigurierbaren Wert (*H*) zunimmt und dass ein an dieses Minimum anschliessendes zweites lokales Maximum der Grösse gesucht und mindestens ein in einer Umgebung dieses zweiten lokalen Maximums liegender Zeitabschnitt als zum Satz von Zeitabschnitten gehörend bestimmt wird.

11. Verfahren nach einem der Ansprüche 2 bis 10, **dadurch gekennzeichnet, dass** die Überführung des Signals in den Frequenzraum mit einer numerischen Fouriertransformation oder mit einer Hartley-Transformation ausgeführt wird.

12. Verfahren nach einem der Ansprüche 2 bis 11, **dadurch gekennzeichnet, dass** mindestens einer der Verfahrensschritte analog-elektronisch ausgeführt wird.

13. Verfahren zum Erkennen eines Datensignals welches in Funktion der Zeit vorliegt unter Benutzung eines Verfahrens nach einem der Ansprüche 2 bis 12, wobei das Datensignal nach charakteristischen Stellen durchsucht wird und diese charakteristische Stellen für die Erzeugung eines charakteristischen Datensatzes verwendet werden, welcher mit Referenz-Datensätzen aus einer Datenbank verglichen wird, mit folgenden Schritten:
- Festlegen von Zeitintervallen *i*
- Überführen des Datensignals in den Intervallen i in den Frequenzraum
- Mittelung über Frequenzbereiche des so erhaltenen Frequenzspektrums zu diskreten Werten *A_{i,n}* für jedes Intervall *i*
- Festlegen einer Mehrzahl von Zeitbereichen, wobei jeder Bereich mehrere Intervalle *i* umfasst,
- Auswahl eines der Zeitbereiche als charakteristische Stelle anhand von aus dem Datensignal oder den Werten *A_{i,n}* gewonnenen Informationen,
- Ermittlung von charakteristischen Daten aus den Werten *A_{i,n}* der im ausgewählten Zeitbereich liegenden Intervalle,
- Bestimmung einer Abweichungsgrösse der charakteristischen Daten von Referenz-Datensätzen, beispielsweise als Summe der quadratischen Abweichungen,
- Auswählen desjenigen Referenz-Datensatzes, bei welchem die Abweichungsgrösse minimal ist.

14. Verfahren nach Anspruch 13, **dadurch gekennzeichnet, dass** die charakteristischen Daten mit allen in der Datenbank vorhandenen Referenz-Datensätzen verglichen werden.

15. Verfahren nach Anspruch 13, **dadurch gekennzeichnet, dass** aus den charakteristischen Daten Index-Daten bestimmt werden, dass den charakteristischen Referenz-Datensätzen ebenfalls Index-Daten zugeordnet werden, und dass nur diejenigen Referenz-Datensätze für den Vergleich herangezogen werden, für welche die Abweichung der Index-Daten von den Index-Daten der charakteristischen Daten einen relativen oder absoluten Schwellenwert nicht übersteigt.

16. Verfahren nach Anspruch 15, **dadurch gekennzeichnet, dass** die Index-Daten mittels der folgenden Verfahrensschritte bestimmt werden:
- Bestimmung einer Durchschnittsfläche des charakteristischen Datensatzes als diejenige lineare Funktion der Zeit und der logarithmisch skalierten Frequenz, für die die Summe der quadratischen Abweichungen von den Werten des charakteristischen Datensatzes minimiert wird,
- Bestimmung von die Durchschnittsfläche charakterisierenden Parametern, bspw. von zwei ihre Lage definierenden Winkeln, als Index-Daten.

17. Speichermedium mit einem darauf gespeicherten Computerprogramm, welches Mittel aufweist, einen Computer Verfahren zur Bestimmung eines charakteristischen Datensatzes für ein Datensignal, welches in Funktion eines Parameters, bspw. der Zeit, gegeben ist mit folgenden Schritten ausführen zu lassen:
- Festlegen von Parameter-Intervallen *i*
- Numerische Bestimmung eines Spektrums des Datensignals in den Intervallen *i*
- Mittelung des so erhaltenen Spektrums zu diskreten Werten *A_{i,n}* für jedes Intervall *i*
**gekennzeichnet durch die weiteren Schritte:**
- Festlegen einer Mehrzahl von Parameter-Bereichen, wobei jeder Bereich mehrere Intervalle i umfasst,
- Auswahl eines der Parameter-Bereiche als charakteristische Stelle anhand von aus dem Datensignal oder den Werten *A_{i,n}* gewonnenen Informationen, und
- Ermittlung von charakteristischen Daten aus den Werten *A_{i,n}* der im ausgewählten Parameter-Bereich liegenden Intervalle.

18. Computerprogramm mit Mitteln, einen Computer ein Verfahren zur Bestimmung eines charakteristischen Datensatzes für ein Datensignal, welches in Funktion eines Parameters, bspw. der Zeit, gegeben ist mit folgenden Schritten ausführen zu lassen:
- Festlegen von Parameter-Intervallen *i*
- Numerische Bestimmung eines Spektrums des Datensignals in den Intervallen *i*
- Mittelung des so erhaltenen Spektrums zu diskreten Werten *A_{i,n}* für jedes Intervall *i*
**gekennzeichnet durch die weiteren Schritte:**
- Festlegen einer Mehrzahl von Parameter-Bereichen, wobei jeder Bereich mehrere Intervalle *i* umfasst,
- Auswahl eines der Parameter-Bereiche als charakteristische Stelle anhand von aus dem Datensignal oder den Werten *A_{i,n}* gewonnenen Informationen, und
- Ermittlung von charakteristischen Daten aus den Werten *A_{i,n}* der im ausgewählten Parameter-Bereich liegenden Intervalle.

## Claims

1. Method for determining a characteristic data set for a data signal which is present as a function of a parameter *t*, wherein the data signal itself is searched through for characteristic locations and these characteristic locations are used for producing a characteristic data set, with the following steps:
- setting parameter intervals *i*
- transforming the data signal with respect to the parameter *t* of in the intervals *i* into the corresponding frequency domain
- averaging the thus obtained spectrum into discrete values *A_{i,n}* for each interval *i*
**characterised by the further steps:**
- determining a plurality of parameters ranges, wherein each range comprises several intervals *i*,
- selecting one of the parameter ranges as a characteristic location by way of information obtained from the data signal or from the values *A_{i,n}*
- evaluating characteristic data from the values *A_{i,n}* of the intervals lying in the parameter range.

2. Method according to claim 1, **characterised in that** the parameter *t* is the time, that the parameter intervals are time intervals and that the parameter ranges are time ranges.

3. Method according to claim 2, **characterised in that** the time range as the characteristic location is selected as characteristic with respect to the frequency distribution, the rhythm, the magnitude of the amplitude of the data signal and/or the temporal change of these variables.

4. Method according to claim 2 or 3, **characterised in that** the data signal is digitised in the case that it is present in a non-digital form, and that it is analysed by way of electronic data processing and is processed into the characteristic data set, wherein the data quantity of the characteristic data set is many times smaller than that of the data signal.

5. Method according to claim 4, comprising the following steps:
- subdividing the data signal into intervals and time segments *z*,
- determining a frequency spectrum in each interval *i*,
- extraction of values *A_{i,n}* characteristic of the frequency spectrum in the interval *i*, for each interval *i*,
- determining values *A_{z,n}* characteristic of the frequency spectrum in the time interval z from the values *A*_{*i,n*,} for each time segment,
- setting a set of time segments forming the time range, whose values *A_{z,n}* form the characteristic data set.

6. Method according to claim 5, **characterised in that** the frequency domain is subdivided into several frequency bands, wherein the width of the various frequency bands preferably in a logarithmic scale is identical, and that the extraction of the characteristic values *A_{i,n}* is a weighted averaging over each frequency band *n*.

7. Method according to claim 5 or 6, **characterised in that** each time segment consists of one or of several intervals.

8. Method according to claim 7, **characterised in that** the determination of the values *A_{z,n}* is effected by averaging the values *A_{i,n}* over the intervals of the time segment.

9. Method according to one of the claims 5 to 8, **characterised in that** for setting the set of time segments, in each case one group of time segments neighbouring one another are grouped together, that from the values *A_{z,n}* of the time segments of each group the sum or a sum of differences is formed, and that that group of time segments at which the thus evaluated value is extreme forms the set of time segments.

10. Method according to one of the claims 5 to 9, **characterised in that** for setting the set of time segments a first local maximum of a variable determined from the data signal as a function of time is determined, that one ascertains whether this variable subsequently to reaching the first local maximum reduces by a first configurable value (*H*), that if this is the case, at least one time segment in the vicinity of the first local maximum is determined as belonging to the set of time segments, that subsequently one searches for a local minimum of the variable following which the variable increases by a second configurable value (*H*) and that one searches for a second local maximum of the variable following this minimum and at least one time segment lying in a vicinity of this second local maximum is determined as belonging to the set of time segments.

11. A method according to one claims 2 to 10, **characterised in that** the transformation of the signal into the frequency domain is carried out with a numeric Fourier transformation or with a Hartley transformation.

12. A method according to one of claims 2 to 11, **characterised in that** at least one of the method steps is carried out in an analogue-electronic manner.

13. A method for determining a **characteristic** data signal, which is present as a function of time using a method according to one of claims 2 to 12, wherein the data signal is searched through for characteristic locations and these characteristic locations are used for producing a characteristic data set, which is compared to a reference data set from a database, with the following steps:
- setting time intervals *i*
- transforming the data signal in the intervals *i* into the frequency domain
- averaging over frequency ranges the thus obtained frequency spectrum into discrete values *A_{i,n}* for each interval *i*
- selecting one of the time ranges as a characteristic location by way of information gained from the data signal or the values *A_{i,n}*,
- evaluating characteristic data from the values *A_{i,n}* of the intervals lying in the selected time range
- determining a deviation variable of the characteristic data from the reference data sets, for example as the sum of the square deviations
- selecting that reference data set with which the deviation size is minimal.

14. A method according to claim 13, **characterised in that** the characteristic data is compared to all reference data sets present in the data base.

15. A method according to claim 13, **characterised in that** from the characteristic data one determines index data, that index data is likewise allocated to the characteristic data sets, and that only those data sets are used for the comparison, for which the deviation of the index data from the index data of the characteristic data does not exceed a relative or absolute threshold value.

16. A method according to claim 15, **characterised in that** the index data is determined by way of the following method steps:
- determining an average surface of the characteristic data set as that linear function of time and of the logarithmically scaled frequency, for which the sum of the square deviations from the values of the characteristic data set is minimised,
- determining parameters characterising the average surface, for example two angles defining its position, as index data.

17. A storage medium with a computer program stored thereon, which comprises means to permit a computer to carry out methods for determining a characteristic data set for a data signal which is given as a function of a parameter, for example time, with the following steps:
- setting parameter intervals *i*
- numerically determining a spectrum of the data signal in the intervals *i*
- averaging the thus obtained spectrum into discrete values *A_{i,n}* for each interval *i*
**characterised by the further steps:**
- determining a plurality of parameter ranges, wherein each range comprises several intervals *i*,
- selecting a parameter range as a characteristic location by way of information obtained from the data signal or from the values *A_{i,n}*, wherein the parameter range comprises several intervals, and
- evaluating characteristic data from the values *A_{i,n}* of the intervals lying in the parameter range.

18. A computer program with means to permit a computer to carry out a method for determining a characteristic data set for a data signal which is given as a function of a parameter, for example time, with the following steps:
- setting parameter intervals *i*
- numerically determining a spectrum of the data signal in the intervals *i*
- averaging the thus obtained spectrum into discrete values *A_{i,n}* for each interval *i*
**characterised by the further steps:**
- determining a plurality of parameters ranges, wherein each range comprises several intervals *i*,
- selecting a parameter range as a characteristic location by way of information gained from the data signal or from the values *A_{i,n}*, wherein the parameter range comprises several intervals, and
- evaluating characteristic data from the values *A_{i,n}* of the intervals lying in the parameter range.

## Revendications

1. Procédé de détermination d'un jeu de données caractéristiques pour un signal de données défini en fonction d'un paramètre *t*, des emplacements caractéristiques du signal de données proprement dit étant recherchés et ces emplacements caractéristiques étant utilisés pour former un jeu de données caractéristiques, lequel procédé comporte les étapes suivantes :
- définition d'intervalles *i* de paramètre,
- transformation en fonction du paramètre *t* du signal de données en les intervalles *i* dans un espace de fréquence correspondant,
- calcul de la moyenne du spectre ainsi obtenu pour obtenir des valeurs discrètes *A_{i,n}* pour chaque intervalle *i*,
**caractérisé par** les autres étapes ci-dessous :
- définition de plusieurs plages de paramètres, chaque plage comprenant plusieurs intervalles *i*,
- sélection d'une des plages de paramètre en tant qu'emplacement caractéristique à l'aide d'informations obtenues à partir du signal de données ou des valeurs *A_{i,n}* et
- détermination de données caractéristiques à partir des valeurs *A_{i,n}* des intervalles situés dans la plage sélectionnée de paramètre.

2. Procédé selon la revendication 1, **caractérisé en ce que** le paramètre t est le temps, **en ce que** les intervalles de paramètre sont des intervalles de temps et **en ce que** les plages de paramètre sont des plages temporelles.

3. Procédé selon la revendication 2, **caractérisé en ce que** la plage temporelle sélectionnée comme caractéristique est l'emplacement caractéristique en termes de répartition des fréquences, de cadence, de niveau d'amplitude du signal de données et/ou de modification de ces grandeurs au cours du temps.

4. Procédé selon les revendications 2 ou 3, **caractérisé en ce que** le signal de données est numérisé au cas où ne présente pas une forme numérique et **en ce qu'**il est analysé par traitement électronique des données et transformé pour obtenir un jeu de données caractéristiques, la quantité de données présentes dans le jeu de données caractéristiques étant plusieurs fois plus petite que celles du signal de données.

5. Procédé selon la revendication 4, qui comprend les étapes suivantes :
- division du signal de données en intervalles *i* et en tronçons temporels *z*,
- détermination d'un spectre de fréquences dans chaque intervalle *i*,
- pour chaque intervalle *i*, extraction de valeurs *A_{i,n}* caractéristiques du spectre de fréquences dans l'intervalle *i*,
- pour chaque tronçon temporel, détermination à partir des valeurs *A_{i,n}* de valeurs A_{z*,n*} caractéristiques du spectre de fréquences dans le tronçon temporel *z* et
- détermination d'un jeu de tronçons temporels formant une plage temporelle et dont les valeurs *A_{z,n}* forment le jeu de données caractéristiques.

6. Procédé selon la revendication 5, **caractérisé en ce que** l'espace de fréquences est divisé en plusieurs bandes de fréquences, les différentes bandes de fréquences ayant une largeur de préférence identique sur une échelle logarithmique, et **en ce que** l'extraction des valeurs caractéristiques *A_{i,n}* est une moyenne pondérée sur chaque bande de fréquences *n*.

7. Procédé selon les revendications 5 ou 6, **caractérisé en ce que** chaque tronçon temporel est constitué d'un ou de plusieurs intervalles.

8. Procédé selon la revendication 7, **caractérisé en ce que** la détermination des valeurs *A_{z,n}* s'effectue en calculant la moyenne des valeurs *A_{i,n}* sur les intervalles du tronçon temporel.

9. Procédé selon l'une des revendications 5 à 8, **caractérisé en ce que** pour définir le jeu de tronçons temporels, on rassemble chaque fois un groupe de tronçons temporels voisins les uns des autres, **en ce qu'**à partir des valeurs *A_{z,n}* des tronçons temporels de chaque groupe, on forme la somme ou une somme de différences et **en ce que** le groupe de tronçons temporels pour lequel la valeur ainsi déterminée est un extrémum forme le jeu de tronçons temporels.

10. Procédé selon l'une des revendications 5 à 9, **caractérisé en ce que** pour définir le jeu de tronçons temporels, on détermine un premier maximum local en fonction du temps d'une grandeur définie à partir du signal de données, **en ce que** l'on vérifie si cette grandeur diminue ensuite d'une première valeur configurable (H) lorsque le premier maximum local est atteint, **en ce que** si c'est le cas, on détermine au moins un tronçon temporel au voisinage du premier maximum local comme appartenant au jeu de tronçons temporels, **en ce qu'**ensuite, on cherche un minimum local de la grandeur après lequel la grandeur augmente d'une deuxième valeur configurable (*H*) et **en ce que** l'on cherche ensuite un deuxième maximum local de la grandeur qui suit ce minimum et que l'on détermine au moins un tronçon temporel situé au voisinage de ce deuxième maximum local comme appartenant au jeu de tronçons temporels.

11. Procédé selon l'une des revendications 2 à 10, **caractérisé en ce que** la conversion du signal dans l'espace des fréquences est réalisée à l'aide d'une transformation numérique de Fourier ou d'une transformation de Hartley.

12. Procédé selon l'une des revendications 2 à 11, **caractérisé en ce qu'**au moins l'une des étapes du procédé est réalisée électroniquement par voie analogique.

13. Procédé de détection d'un signal de données qui est une fonction du temps, par recours à un procédé selon l'une des revendications 2 à 12, dans lequel on recherche des emplacements caractéristiques dans le signal de données et on utilise ces emplacements caractéristiques pour former un jeu de données caractéristiques qui est comparé à un jeu de données de référence présent dans une base de données, lequel procédé présentant les étapes suivantes :
- définition d'intervalles de temps *i*,
- conversion du signal de données dans l'espace des fréquences pour les intervalles *i*,
- calcul de la moyenne sur des plages de fréquences du spectre de fréquence ainsi obtenu, pour obtenir des valeurs discrètes *A_{i,n}* pour chaque intervalle *i*,
- définition de plusieurs plages temporelles, chaque plage comprenant plusieurs intervalles *i*,
- sélection de l'une des plages temporelles comme étant un emplacement caractéristique, à l'aide d'informations obtenues à partir du signal de données ou des valeurs *A_{i,n}*,
- détermination de données caractéristiques à partir des valeurs *A_{i,n}* des intervalles situés dans la plage temporelle sélectionnée,
- détermination d'une grandeur d'écart des données caractéristiques par rapport à des jeux de données de référence, par exemple sous la forme de la somme des écarts types,
- sélection du jeu de données de référence pour lequel la grandeur d'écart est minimale.

14. Procédé selon la revendication 13, **caractérisé en ce que** les données caractéristiques sont comparées à tous les jeux de données de référence présents dans la base de données.

15. Procédé selon la revendication 13, **caractérisé en ce qu'**à partir des données caractéristiques, on détermine des données d'indice, **en ce que** les données d'indice sont également associées aux jeux de données caractéristiques de référence et **en ce que** l'on n'utilise pour la comparaison que les jeux de données de référence pour lesquels l'écart entre les données d'indice et les données d'indice des données caractéristiques ne dépasse pas une valeur de seuil relative ou absolue.

16. Procédé selon la revendication 15, **caractérisé en ce que** les données d'indice sont déterminées par les étapes suivantes :
- détermination d'une surface moyenne du jeu de données caractéristiques comme fonction linéaire du temps et de la fréquence à l'échelle logarithmique qui minimise la somme des écarts types des valeurs du jeu de données caractéristiques,
- détermination de paramètres qui caractérisent la surface moyenne, par exemple de deux angles qui définissent sa position, comme données d'indice.

17. Support de mémoire sur lequel est conservé un programme informatique qui présente des moyens qui permettent à un ordinateur d'exécuter un procédé de détermination d'un jeu de données caractéristiques d'un signal de données qui est fourni en fonction d'un paramètre, par exemple le temps, et qui présente les caractéristiques suivantes :
- définition d'intervalles i du paramètre,
- détermination numérique d'un spectre du signal de données dans les intervalles *i*,
- calcul de la moyenne du spectre ainsi obtenu pour obtenir des valeurs discrètes *A_{i,n}* pour chaque intervalle i,
**caractérisé par** les autres étapes ci-dessous :
- définition de plusieurs plages de paramètre, chaque plage comprenant plusieurs intervalles *i*,
- sélection d'une des plages de paramètre comme emplacement caractéristique à l'aide d'informations obtenues à partir du signal de données ou des valeurs *A_{i,n}* et
- détermination de données caractéristiques à partir des valeurs *A_{i,n}* des intervalles situés dans la plage de paramètre sélectionnée.

18. Programme informatique doté de moyens qui permettent à un ordinateur d'exécuter un procédé de détermination d'un jeu de données caractéristiques d'un signal de données qui est fourni en fonction d'un paramètre, par exemple le temps, lequel procédé présente les étapes suivantes :
- définition d'intervalles *i* du paramètre,
- détermination numérique d'un spectre du signal de données dans les intervalles *i*,
- calcul de la moyenne du spectre ainsi obtenu pour obtenir des valeurs discrètes *A_{i,n}* pour chaque intervalle *i*,
**caractérisé par** les autres étapes ci-dessous :
- définition de plusieurs plages de paramètre, chaque plage comprenant plusieurs intervalles *i*,
- sélection d'une des plages de paramètre comme emplacement caractéristique à l'aide d'informations obtenues à partir du signal de données ou des valeurs *A_{i,n}* et
- détermination de données caractéristiques à partir des valeurs *A_{i,n}* des intervalles situés dans la plage de paramètre sélectionnée.
